# EUROPÄISCHE PATENTSCHRIFT

(11) **EP 3 010 679 B1**
(45) Veröffentlichungstag und Bekanntmachung des Hinweises auf die Patenterteilung: **18.04.2018**
(21) Anmeldenummer: 14736645.4
(22) Anmeldetag: 11.06.2014
(51) Int. Cl.: B23K 26/08, B23K 26/20, B23K 26/02, B23K 26/04

(54) **BEARBEITUNGSEINRICHTUNG MIT EINER VOR ODER HINTER EINEM STRAHLNAHEN ANDRÜCKELEMENT ANGEORDNETEN ANDRÜCKEINRICHTUNG**
WORKING APPARATUS WITH A FURTHER PRESSING ELEMENT LOCATED BEFORE OR AFTER A PRESSING ELEMENT LOCATED CLOSED TO A BEAM
DISPOSITIF D'USINAGE AVEC UN ELEMENT PRESSEUR SITUE AVANT OU APRES UN AUTRE ELEMENT PRESSEUR SITUE PRES D'UN FAISCEAU

(30) Priorität: 17.06.2013 DE 202013102577 U
(43) Veröffentlichungstag der Anmeldung: 27.04.2016
(73) Patentinhaber: KUKA Industries GmbH, 86165 Augsburg (DE)
(72) Erfinder: HENNEKE, Thomas, 86971 Peiting (DE); HÖLSCHER, Manfred, 48291 Telgte (DE)
(74) Vertreter: Ernicke, Klaus Stefan
(86) Internationale Anmeldenummer: PCT/EP2014/062084
(87) Internationale Veröffentlichungsnummer: WO 2014/202440

(56) Entgegenhaltungen:
- DE-U1-202010 008 808
- JP-A- 2002 086 286
- JP-A- 2004 358 529
- JP-A- 2007 118 033
- JP-A- 2013 059 786
- US-A1- 2004 256 366

## Beschreibung

Die Erfindung betrifft eine Bearbeitungseinrichtung, insbesondere Strahlfügeeinrichtung, mit den Merkmalen im Oberbegriff des Hauptanspruchs 1. Eine solche Strahlfügeeinrichtung ist aus der JP 2007/118033 A bekannt. An einem Portalträger ist ein Schweißroboter mit einem Laserschweißkopf und einer einzelnen, seitlich neben dem Laserstrahl befindlichen Andrückrolle angeordnet. Weitere Andrückrollen befinden sich an einem Hilfsträger, der seinerseits an dem Portalträger in dessen Längsrichtung beweglich verfahrbar ist. Die gesamte Anordnung kann über das Portal entlang eines langen Werkstücks verfahren werden. Bei dieser Anordnung sind die Andrückrollen an getrennten Rahmenteilen angeordnet und laufen nicht in einer gemeinsamen Spur. Die Andrückrollen wirken einseitig und von oben auf die Werkstücke ein.

Die JP S56 14075 A zeigt eine Strahlfügeeinrichtung mit zwei Rollenpaaren, die gemeinsam an die Ober- und Unterseite von Werkstückflanschen angedrückt werden, wobei durch unterschiedliche Rollendurchmesser die Flansche tordiert werden.

Eine andere Strahlfügeeinrichtung ist aus der DE 20 2010 008 808 U1 oder der DE 201 03 411 U1 bekannt. Sie dient zum Fügen, insbesondere Schweißen oder Löten von Werkstücken mit einem Laserstrahl und weist ein in einer Transportrichtung von einem Industrieroboter bewegbares Fügewerkzeug mit einem den Laserstrahl emittierenden Bearbeitungskopf und einer Andrückeinrichtung mit einem Andrückelement auf, welches in Transportrichtung gesehen auf Höhe und seitlich neben dem Laserstrahl angeordnet ist. Die in der DE 20 2010 008 808 U1 gezeigte Strahlfügeeinrichtung wird zum Schweißen oder Löten von Dachteilen an Seitenwandteilen einer Fahrzeugrohkarosserie eingesetzt.

Es ist Aufgabe der vorliegenden Erfindung, die vorbekannte Bearbeitungstechnik, insbesondere die Strahlfügeeinrichtungen, weiter zu verbessern.

Die Erfindung löst diese Aufgabe mit den Merkmalen im Hauptanspruch 1. Die beanspruchte Bearbeitungstechnik, d.h. die Bearbeitungseinrichtung und das Bearbeitungsverfahren können dank verbesserter Andrücktechnik zu höherwertigen Bearbeitungsergebnissen, insbesondere höheren Fügequalitäten führen.

Die Bearbeitungstechnik eignet sich besonders für das Fügen von mehrteiligen Werkstücken, bei denen die Werkstückteile bereichsweise schräg zur Andrückrichtung des Bearbeitungswerkzeugs ausgerichtet sind und sich entlang dieser schrägen Ebene aneinander abstützten. Die Werkstückteile können mittels der Andrückvorrichtung und den mehreren Andrückelementen an mehreren Stellen und damit gleichmäßiger sowie in einem größeren Bereich aneinander angedrückt und gespannt werden. Etwaige Toleranzen der Werkstückteile können dadurch besser und über einen größeren Bereich entlang der Bearbeitungsbahn kompensiert werden. Das Bearbeitungsergebnis, insbesondere eine Fügenaht, kann durch diese Kompensation gleichmäßiger ausfallen und hat eine bessere technische und optische Qualität.

Die Andrückeinrichtung mit den mindestens zwei, vorzugsweise drei oder mehr Andrückelementen hat den Vorteil, dass sie an die jeweiligen Spann- und Andrückbedürfnisse der Werkstückteile optimal angepasst werden kann. Hierzu werden die Andrückelemente einzeln und vorzugsweise unabhängig voneinander zum Andrücken aktiviert oder deaktiviert. Zum Aktivieren können sie z.B. in eine Andrückposition am Werkstück bzw. Werkstückteil zugestellt und mit einer Spannkraft F angedrückt werden. Bei der Deaktivierung können sie in eine andrückfreie Ruhestellung bewegt oder in der Andrückposition belassen und kraftlos geschaltet werden.

Ein Andrücken der Werkstückteile in unmittelbarer Nachbarschaft des Strahlauftreffpunkts und der Fügestelle ist an den Endbereichen oder besonderen fügekritischen Stellen einer Bearbeitungsbahn, insbesondere einer Fügenaht, von Vorteil. Im inneren oder mittleren Bahnbereich kann es in manchen Anwendungsfällen, z.B. bei den vorgenannten Dachschweißungen, vorteilhaft sein, in Transportrichtung des Bearbeitungswerkzeugs mit Abstand nur vor oder hinter der Bearbeitungs- oder Fügestelle anzudrücken. Durch den entsprechend verlängerten Andrück- und Spannbereich vergleichmäßigt sich die Toleranzaufnahme und die einhergehende Verformung der Werkstückteile, sodass sich ein verbessertes Bearbeitungsergebnis, insbesondere eine bessere Qualität der Fügenaht, ergeben. Besonders die optische Qualität ist in diesen mittleren Bahnbereichen unter Umständen von vorrangiger Bedeutung.

Die von dem oder den Andrückelementen aufgebrachte Andrück- oder Spannkraft kann feinfühlig gesteuert oder bedarfsweise mittels einer geeigneten Sensorik auch geregelt werden. Hierbei können auch werkstückseitige Randbedingungen, z.B. Erhalt der Oberflächenqualität oder dergleichen berücksichtigt werden.

Ferner ist es aus Qualitätsgründen vorteilhaft, wenn ein oder mehrere, vorzugsweise alle Andrückelemente als Andrückrollen ausgebildet sind, die ohne Oberflächenbeeinträchtigung auf dem beaufschlagten Werkstückteil abrollen können. Hierfür ist es außerdem günstig, einen Drehantrieb vorzusehen. Dieser kann mit der Transport- oder Vorschubbewegung und der dadurch bedingten Rollgeschwindigkeit synchronisiert werden.

Eine besonders einfache Ausführungsform sieht einen mechanischen Drehantrieb mit Ableitung der Drehbewegung von einer ebenfalls an das Werkstückteil reibschlüssig angepressten Reibrolle vor, die für das Werkstückteil besonders schonend die üblicherweise translatorische Transport- oder Vorschubbewegung in eine Drehbewegung umsetzt und hierüber mittels einer Achsverbindung eine oder andere Andrückrollen antreibt. Die einfach oder mehrfach vorhandene Reibrolle kann zur termischen Abschirmung mit Distanz zur Bearbeitungsstelle bzw. Bearbeitungsbahn angeordnet sein. Die Andrückrollen können dadurch eine für die eigentliche Andrückaufgabe besser geeignete Ausbildung hinsichtlich Material, Formgebung oder dergleichen aufweisen, die auch den termischen Einflüssen widerstehen kann und für etwaige Prozesseinflüsse, z.B. Schweiß- oder Lötspritzer, Gase etc. unempfindlich ist.

Die beanspruchte Bearbeitungstechnik kann für unterschiedlichste Bearbeitungsverfahren mit einem energiereichen Strahl eingesetzt werden. Bevorzugt wird eine Laserstrahlbearbeitung. Besondere Vorteile bestehen dabei in der Fügetechnik mit einem Laserstrahl oder einem anderen energiereichen Strahl, z.B. einem Ionen- oder Plasmastrahl. Bevorzugte Fügetechniken sind Löten oder Schweißen. Insbesondere das Strahllöten, vorzugsweise Laserlöten, bietet für die vorbeschriebenen Einsatzzwecke im Karosseriebau besondere Vorteile.

In den Unteransprüchen sind weitere vorteilhafte Ausgestaltungen der Erfindung angegeben.

Die Erfindung ist in den Zeichnungen beispielhaft und schematisch dargestellt. Im einzelnen zeigen:
- Figur 1:: eine abgebrochene schematische Seitenansicht einer Bearbeitungseinrichtung mit einem Industrieroboter und einem Bearbeitungswerkzeug,
- Figur 2:: eine schematische Querschnittsdarstellung einer Fügestelle an zwei Werkstückteilen und des Bearbeitungswerkzeugs,
- Figur 3 bis 7:: schematische Darstellungen einer Andrückeinrichtung des Bearbeitungswerkzeugs in verschiedenen Betriebsstellungen und
- Figur 8:: eine schematische Seitenansicht einer Andrückrolle mit einem Drehantrieb.

Die Erfindung betrifft eine Bearbeitungseinrichtung (1) und ein Verfahren zum Bearbeiten eines Werkstücks (4) mit einem emittierten energiereichen Strahl (2). Die Bearbeitungseinrichtung (1) ist bevorzugt als Strahlfügeeinrichtung und das Verfahren als Strahlfügeverfahren ausgebildet.

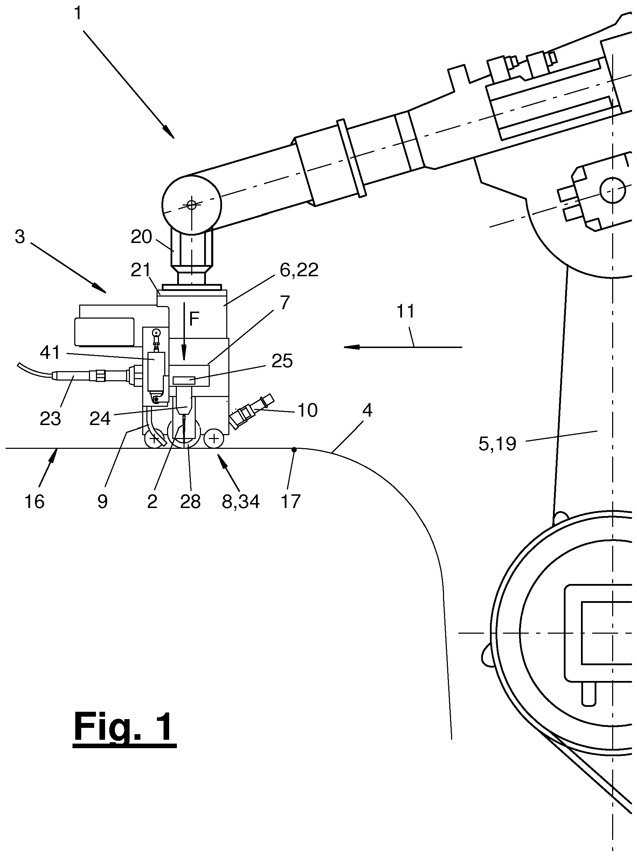

Figur 1 zeigt in einer abgebrochenen schematischen Seitenansicht eine Bearbeitungseinrichtung (1) in der Ausbildung als Strahlfügeeinrichtung. Die Bearbeitungseinrichtung (1) arbeitet mit einem energiereichen Strahl (2), der in diesem Ausführungsbeispiel als Laserstrahl ausgebildet ist. Die nachfolgend beschriebenen Merkmale der Strahlfügeeinrichtung (1) und des energiereichen Strahls (2) gelten entsprechend auch für andere Arten von Bearbeitungseinrichtungen (1) und anderen energiereichen Strahlen (2).

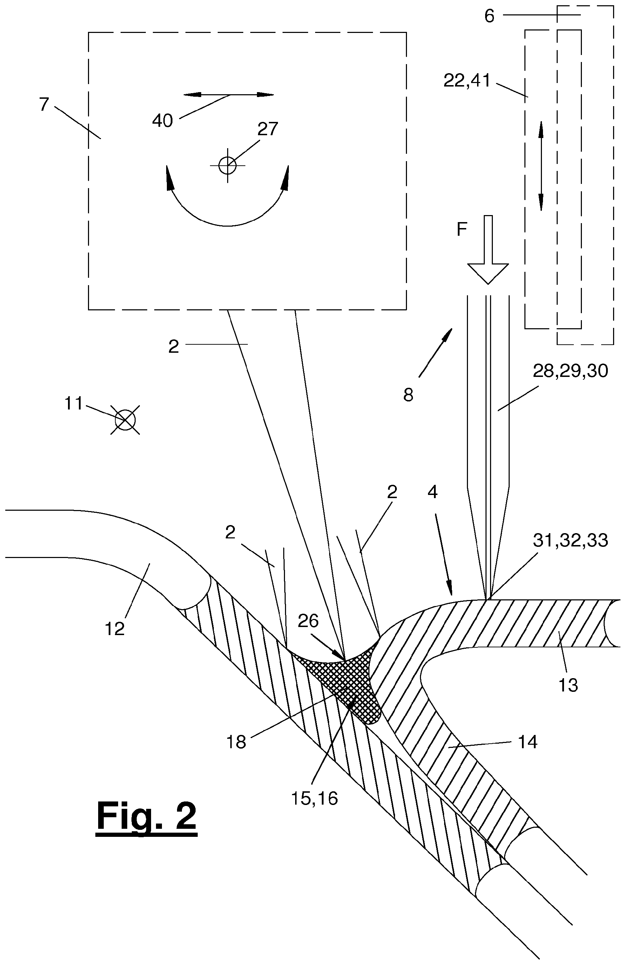

Die in Figur 1 und in anderen Zeichnungen gezeigte Strahlfügeeinrichtung (1) ist als Schweißeinrichtung oder Löteinrichtung ausgebildet und dient zum Fügen von einem ggf. aus zwei oder mehr Werkstückteilen (12,13) bestehenden Werkstück (4). Die Werkstückteile (12,13) können z.B. gemäß Figur 2 Bleche einer Rohkarosserie eines Fahrzeugs sein. Das eine Blech (12) ist z.B. Bestandteil einer Seitenwand und das andere Blech (13) ein Dachblech, das einen umgebogenen Rand (14) aufweist und mit diesem an einem schräg zur vertikalen Raumachse ausgerichteten Abschnitt des Seitenwandblechs (12) anliegt. An der Kontaktstelle werden die Bleche (12,13) in der gezeigten Ausführungsform miteinander verlötet. An dieser Kontakt- oder Verbindungsstelle, die nachfolgend auch als Fügestelle (15) bezeichnet wird, ist ein Zwickel oder eine Kehle zwischen dem Blech (12) und dem ungebogenen Blechrand (14) ausgebildet, der von einem Fügehilfsmittel (18), z.B. einem Lötmittel (18) oder einem Schweiß-Zusatzdraht oder dgl., gefüllt werden kann. Das Fügehilfsmittel (18) und ggf. die Bleche werden von dem Laserstrahl (2) aufgeschmolzen und miteinander verbunden, insbesondere verlötet oder verschweißt.

Die Bleche (12,13) erstrecken sich in einer Richtung senkrecht zur Zeichenebene von Figur 2, wobei eine Bearbeitungsbahn oder Fügenaht (16), insbesondere Löt- oder Schweißnaht, in der gleichen Richtung gebildet wird.

Die in Figur 1 gezeigte Strahlfügeeinrichtung (1) weist ein Bearbeitungswerkzeug (3) und eine Handhabungseinrichtung (5) für dessen Führung auf. Das Bearbeitungswerkzeug (3) ist vorzugsweise als Strahlfügewerkzeug und im gezeigten Ausführungsbeispiel als Laserlötwerkzeug ausgebildet. Die nachfolgend beschriebenen Merkmale gelten entsprechend auch für andere Varianten von Bearbeitungswerkzeugen (3).

Die Handhabungseinrichtung (5) ist mehrachsig beweglich und kann eine beliebige Zahl und Anordnung von rotatorischen und/oder translatorischen Bewegungsachsen aufweisen. Die Handhabungseinrichtung (5) ist vorzugsweise als Industrieroboter (19) ausgebildet und weist ein Abtriebsglied (20) auf. In der gezeigten Ausführungsform handelt es sich um einen Gelenkarmroboter mit sechs Drehachsen. Er besteht aus einem Sockel, einer darauf drehbar und schwenkbar gelagerten Schwinge, die an ihrem freien Ende einen schwenkbar gelagerten Arm oder Ausleger trägt, an dessen Ende das Abtriebsglied (20) angeordnet ist. Dieses ist z.B. als sogenannte Roboterhand ausgeführt, die im gezeigten Ausführungsbeispiel drei rotatorische Achsen hat. Das Abtriebsglied (20) weist einen drehenden Abtriebsflansch auf, der mit einem Anschluss (21) am Strahlfügewerkzeug (3) direkt oder unter Zwischenschaltung einer Wechselkupplung verbunden ist. Die Verbindung kann lösbar sein.

Das Bearbeitungswerkzeug, insbesondere Strahlfügewerkzeug (3) weist einen Bearbeitungskopf (7), insbesondere einen Strahlkopf, auf, der den Laserstrahl (2) emittiert und zum Werkstück (4) hin richtet. Das Bearbeitungswerkzeug (3) weist ferner eine Andrückeinrichtung (8) mit mehreren Andrückelementen (28,29,30) auf, die gegen das Werkstück (4) zugestellt und mit einer Andrückkraft (F) angedrückt werden können. Außerdem kann das Bearbeitungswerkzeug (3) eine Zuführeinrichtung (9) für das besagte Hilfsmittel (18) und ggf. eine Sensorik (10) haben.

Der Strahlkopf (7) weist eine Strahlzuführung (23), z.B. ein Lichtleitfaserkabel, eine Optik (25) und einen Strahlauslass (24) auf, aus dem der Laserstrahl (2) zum Werkstück (4) hin austritt. Die Optik (25) kann verstellbar sein. Sie kann hierbei z.B. eine Autofokuseinrichtung zur axialen Verschiebung des Strahlfokus und/oder eine Scanneroptik mit gesteuert verstellbaren, insbesondere schwenkbaren Linsen und/oder Spiegeln aufweisen, um den emittierten Laserstrahl (2) in seinem Austrittswinkel ablenken zu können.

Der Laserstrahl (2) hat einen Auftreffpunkt (26) auf dem beaufschlagten Werkstück (4) bzw. auf einem oder beiden Werkstückteilen (12,13) sowie auf dem ggf. vorhanden Fügehilfsmittel (18). Der Fokus kann oberhalb oder unterhalb des Auftreffpunktes (26) liegen.

Die Handhabungseinrichtung (5) bewegt das Bearbeitungswerkzeug (3) in einer Transportrichtung oder Vorschubrichtung (11), die längs der gewünschten Bearbeitungsbahn (16) ausgerichtet ist. Um der vorgegebenen Bearbeitungsbahn (16) exakt folgen zu können, kann das Bearbeitungswerkzeug (3), insbesondere der Strahlkopf (7), eine Nachführeinrichtung (40) aufweisen, die eine in Figur 2 angedeutete Nachführbewegung quer zur Transportrichtung (11) und zur Bearbeitungsbahn (16) ermöglicht. Der Strahlkopf (7) kann außerdem derart ausgebildet oder angeordnet sein, dass er den Laserstrahl (2) vertikal nach unten oder in einer schrägen Richtung emittiert.

Ferner kann der Strahlkopf (7) eine in Figur 2 angedeutete Pendeleinrichtung (27) mit einer längs zur Transportrichtung (11) gerichteten Pendelachse aufweisen. Hierdurch kann der Laserstrahl (2) während des Vorschubs gesteuerte Pendelbewegungen quer zur Transportrichtung (11) und zur Bearbeitungsbahn (16) ausführen. Die Pendeleinrichtung (27) kann durch die vorgenannte Scanneroptik gebildet werden. Sie kann alternativ oder zusätzlich durch eine mechanische Dreheinrichtung ausgebildet sein.

Zum Suchen und Verfolgen der Bearbeitungsbahn (16) am Werkstück kann die Zuführeinrichtung (9) für das besagte Hilfsmittel (18) als taktiler Sensor im Zusammenspiel mit einer entsprechenden, z.B. kraftlosen, Nachführeinrichtung (40) eingesetzt werden. Alternativ oder zusätzlich kann eine bevorzugt berührungslose Sensorik (10) zum Suchen und Verfolgen der Bearbeitungsbahn (16) und zum Steuern der angetriebenen Nachführeinrichtung (40) eingesetzt werden. Mit einer Sensorik (10) kann auch eine Qualitätskontrolle des Bearbeitungsprozesses, insbesondere einer Fügenaht (16), erfolgen.

Das Bearbeitungswerkzeug (3) weist ferner ein Gestell (6) auf, an dem der Anschluss (21) angeordnet ist, der ggf. auch eine Medienkupplung beinhalten kann. Das Gestell (6) kann Hauptebene bzw. eine Anbauebene aufweisen, die längs der Transportrichtung (11) ausgerichtet ist.

Am Gestell (6) kann ferner ein Schlitten (22) beweglich angeordnet und geführt sein, der mit einer Anstelleinrichtung (41) gesteuert in Richtung zum Werkstück (4) hin und zurück bewegt werden kann. Diese Anordnung kann z.B. entsprechend der DE 20 2010 008 808 U1 ausgebildet sein. Der Strahlkopf (7) und die nachfolgend erläuterte Andrückeinrichtung (8) sind in der gezeigten Ausführungsform an dem Schlitten (22) angeordnet und können hierüber an das Werkstück (4) zugestellt werden. Alternativ ist eine stationäre Anordnung am Gestell (6) möglich.

Die Andrückeinrichtung (8) dient dazu, das Werkstück (4) oder zumindest ein Werkstückteil (13) mit einer gesteuerten Andrückkraft oder Spannkraft (F) zu beaufschlagen und an geeigneter Stelle im unmittelbaren oder weiteren Bereich der Bearbeitungsstelle bzw. Fügestelle (15) anzudrücken.

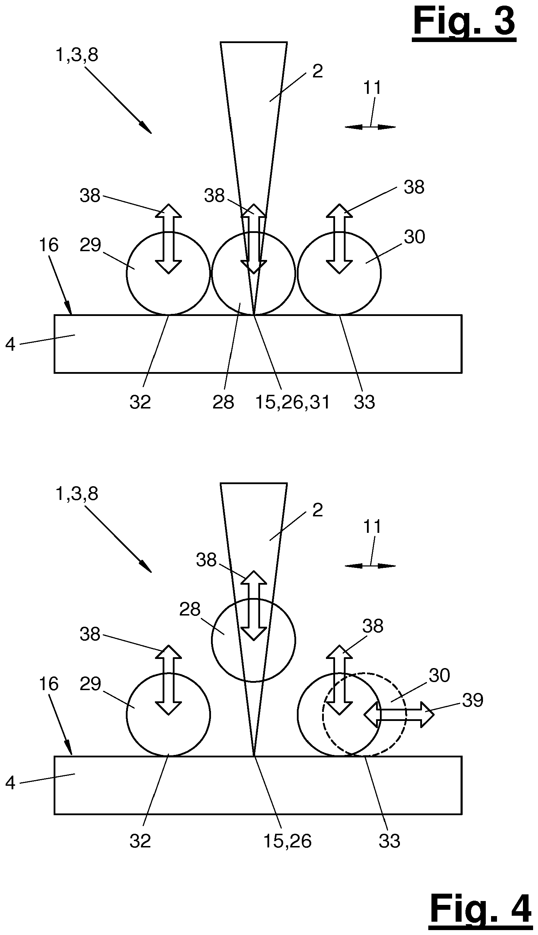

Wie Figur 3 bis 7 in einer Schemadarstellung verdeutlichen, weist die Andrückeinrichtung (8) mehrere, insbesondere zwei, vorzugsweise drei Andrückelemente (28,29,30) auf, die auf das Werkstück (4) bzw. das Werkstückteil (13) einwirken. Vorzugsweise ist ein Andrückelement (28) in Transportrichtung (11) gesehen auf gleicher Höhe und querab seitlich neben dem Laserstrahl (2) angeordnet. Das strahlnahe Andrückelement (28) hat eine Andrückstelle (31), die sich in unmittelbarer Nachbarschaft zur Bearbeitungs- bzw. Fügestelle (15) befindet und mit dieser beim Vorschub des Bearbeitungswerkzeugs (3) mitwandert.

Die Andrückeinrichtung (8) weist mindestens ein weiteres Andrückelement (29,30) auf, das in Transportrichtung (11) vor und/oder hinter dem strahlnahen Andrückelement (28) angeordnet ist. Diese Konfiguration kann in unterschiedlicher Weise ausgestaltet sein.

Im gezeigten Ausführungsbeispiel weist die Andrückeinrichtung (8) drei Andrückelemente (28,29,30) auf. Das strahlnahe Andrückelement (28) ist zentral angeordnet, wobei in Transportrichtung (11) davor und dahinter jeweils ein weiteres peripheres Andrückelement (29,30) angeordnet ist. Die Andrückelemente (28,29,30) sind auf der gleichen Seite des Werkstücks (4) angeordnet und wirken mit einer Andrückkraft (F) aus der gleichen Richtung, bevorzugt in Normalenrichtung oder mit leichter Schrägstellung, auf das Werkstück (4) ein. Zusätzlich können bei Bedarf weitere Andrückelemente mit Einwirkung an der andere Werkstückseite vorhanden sein. Die Andrückelemente (28,29,30) sind bevorzugt in Transportrichtung (11) fluchten in einer Reihe hintereinander angeordnet.

Zumindest ein Andrückelement (28,29,30) kann in seiner Andrückfunktion aktiviert oder deaktiviert werden und bei Aktivierung die besagte Andrückkraft (F) auf das Werkstück (4) oder zumindest ein Werkstückteil (13) ausüben. Bei Deaktivierung wird die Andrückkraft (F) unwirksam. Die Aktivierung/Deaktivierung kann durch eine Bewegung und/oder eine Kraftbeaufschlagung des oder der Andrückelemente (28,29,30) erfolgen.

Hierzu können die Andrückelemente (28,29,30) mittels einer steuerbaren Zustelleinrichtung (38) zwischen einer Andrückposition am Werkstück (4) und einer davon distanzierten Ruheposition bewegbar sein. Diese Andrückelemente (28,29,30) sind dabei einzeln mittels einer steuerbaren Zustelleinrichtung (38) zwischen ihrer Andrück- und Ruheposition bewegbar. Vorzugsweise sind alle diese Andrückelemente (28,29,30) einzeln und unabhängig voneinander in der genannten Art zustellbar und beweglich.

Die Zustelleinrichtung (38) kann in beliebig geeigneter Weise konstruktiv ausgebildet sein, z.B. als pneumatischer oder hydraulischer Zylinder, als elektromotorischer Spindel- oder Zahnstangentrieb oder dgl.. Die Zustelleinrichtung (38) kann mittels einer nicht dargestellten Steuerung, z.B. der Robotersteuerung, steuerbar sein. Mittels einer geeigneten Sensorik, z.B. einer kraft- oder wegaufnehmenden Sensorik, kann die Zustellung auch geregelt erfolgen. In der Andrückposition können das oder die Andrückelement(e) (28,29,30) mit einer steuerbaren, vorzugsweise regelbaren Andrückkraft (F) an das Werkstück (4) angepresst werden. Diese Kraft kann von der Anstelleinrichtung (41) und/oder der jeweils zugehörigen Zustelleinrichtung (38) aufgebracht werden.

Die Zustelleinrichtung (38) ist in Figur 3 bis 7 schematisch durch einen vertikalen Doppelpfeil symbolisiert. In der Andrück- und Ruheposition kann das jeweilige Andrückelement (28,29,30) arretiert werden.

Jedem Andrückelement (28,29,30) kann eine eigene steuerbare Zustelleinrichtung (38) zugeordnet sein. In einer anderen Ausführung ist es möglich, mehreren Andrückelementen, z.B. den zwei peripheren Andrückelementen (29,30), eine gemeinsame steuerbare Zustelleinrichtung (38) zuzuordnen. Diese kann z.B. als drehbare Lagergabel ausgebildet sein. Hierdurch können die Andrückelemente (29,30) im gegenseitige Wechsel in ihrer Andrück- und Ruheposition bewegt werden. Wenn z.B. das andere periphere Andrückelement (29) die Andrückposition einnimmt, wird das andere periphere Andrückelement (30) in die Ruhestellung abgehoben. In der Ruhestellung sind die Andrückelemente (28,29,30) jeweils vom Werkstück (4) distanziert.

Wie Figur 4 bei der rechten peripheren Andrückrolle (30) in gestrichelter Darstellung schematisch andeutet, kann einem oder mehrere Andrückelementen (28,29,30) eine Verstelleinrichtung (39) zur Veränderung der Elementposition in Transportrichtung (11) bzw. entlang des Werkstücks (4) bzw. der Bearbeitungsbahn (16) zugeordnet sein. Vorzugsweise haben die beiden peripheren Andrückelemente (29,30) eine solche Verstelleinrichtung (3). Die Verstelleinrichtung (39) kann ebenfalls mit der Steuerung verbunden sein.

Für die konstruktive Ausbildung des oder der Andrückelemente (28,29,30) gibt es verschieden Möglichkeiten. Die Andrückelemente (28,29,30) können untereinander gleich oder unterschiedlich ausgebildet sein.

In dem gezeigten Ausführungsbeispielen sind die Andrückelemente (28,29,30) jeweils als drehbare Andrückrollen mit quer zur Transportrichtung verlaufender Drehachse ausgebildet, die in Andrückposition auf der Werkstückoberfläche abwälzen. Die Andrückrollen (28,29,30) können gleiche oder unterschiedliche Formen und Abmessungen, insbesondere Durchmesser, haben. Die strahlnahe Andrückrolle (28) kann z.B. größer als die weiteren Andrückrollen (29,30) sein.

In einer anderen Ausführungsform können das oder die Andrückelemente (28,29,30) als Andrückfinger mit gleitendem Kontakt auf der Werkstückoberfläche ausgestaltet sein. Daneben gibt es beliebige weitere konstruktive Ausgestaltungen.

Ein oder mehrere, bevorzugt alle Andrückelemente (28,29,30) bestehen aus einem thermo- und prozessstabilen Material, insbesondere Metall. Vorzugsweise bestehen sie aus Stahl. Sie werden dadurch von der Prozesswärme an der Bearbeitungsstelle (15) nicht in unzulässiger Weise verändert, insbesondere verformt. Außerdem sind sie resistent gegen andere Prozesseinflüsse, z.B. Schweiß- oder Lötspritzer, Dämpfe, Flüssigkeiten oder dergleichen.

Figur 3 bis 7 zeigen verschiedene Betriebsstellungen der Andrückeinrichtung (8).

In der Variante von Figur 3 sind alle drei rollenförmige Andrückelemente (28,29,30) aktiviert bzw. in Arbeitsposition und kontaktieren die Werkstückoberfläche an drei lokalen und z.B. punktförmigen Andrückstellen (31,32,33). Hierdurch werden das Werkstück (4) bzw. die Werkstückteile (12,13) nicht nur an der Bearbeitungsstelle (15), sondern auch an den in Transportrichtung (11) davor und dahinter liegenden Bereichen mit einer Anpresskraft (F) beaufschlagt und angedrückt.

Figur 4 verdeutlicht eine Betriebsstellung, die für den inneren oder mittleren Bereich einer Bearbeitungsbahn (16) günstig ist. Hierbei befindet sich das strahlnahe und z.B. zentrale Andrückelement (28) in der deaktivierten oder ggf. abgehobenen Ruheposition, wobei die beiden weiteren peripheren Andrückelemente (29,30) aktiviert sind bzw. sich in Andrückposition befinden und mit ihren Andrückstellen (32,33) in Transportrichtung (11) von der momentanen Bearbeitungsstelle (15) distanziert sind. Zwischen den distanzierten Andrückstellen (32,33) wird ein verbreiteter Spannbereich gebildet, der die Bearbeitungsstelle (15) übergreift und in dem sich etwaige Werkstücktoleranzen bzw. Werkstückverformungen ausgleichen können, sodass sich eine Fügenaht (16) in der vorgegebenen Form einstellt. Diese kann frei von unerwünschten Verwerfungen oder sonstigen optisch sichtbaren Anomalitäten sein.

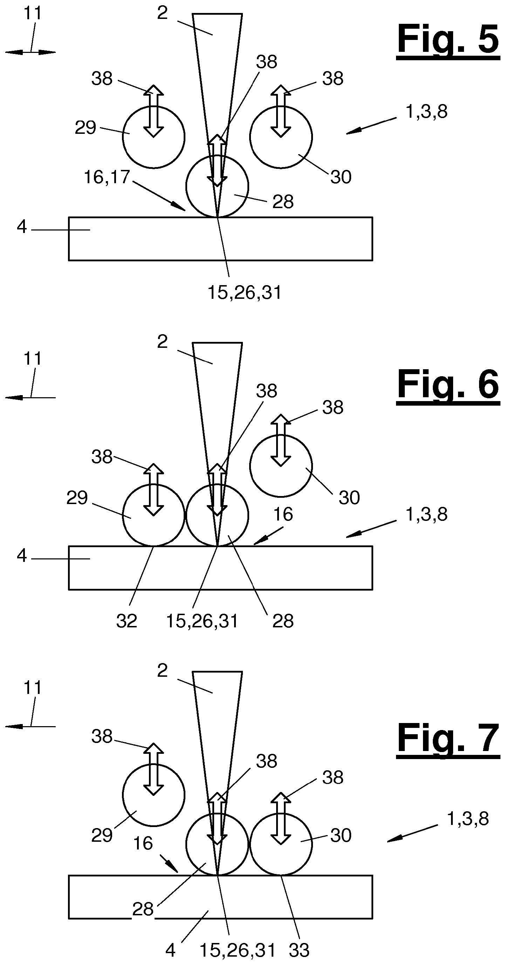

Figur 5 zeigt eine Betriebsstellung, in der das zentrale Andrückelement (28) aktiviert ist bzw. die Andrückposition einnimmt und die peripheren Andrückelemente (29,30) deaktiviert sind bzw. sich in der abgehobenen Ruhestellung befinden. Diese Betriebsstellung und das Andrücken und Spannen des Werkstücks (4) bzw. der Werkstückteile (12,13) unmittelbar neben der Bearbeitungs- bzw. Fügestelle (15) kann an Beginn und Ende (17) einer Bearbeitungsbahn (16) und auch an anderen Bahnbereichen, z.B. an Biege -oder Knickstellen oder dgl. sinnvoll und vorteilhaft sein, um hier eine sichere Fügeverbindung zu schaffen. Sie kann auch für andere Fügeaufgabe und Nahtformen vorteilhaft und sinnvoll sein.

Im weiteren Vorschub des Bearbeitungswerkzeugs (3) kann dann von der Betriebsstellung gemäß Figur 5 in die Betriebsstellung von Figur 4 gewechselt werden, wobei das strahlnahe Andrückelement (28) deaktiviert bzw. in die Ruheposition abgehoben und die weiteren Andrückelemente (29,30) aktiviert bzw. in die Andrückposition zugestellt werden.

Figur 6 zeigt eine Betriebsstellungsvariante. In diesem Fall sind das strahlnahe Andrückelement (28) und das in Transportrichtung (11) und in weiterer Erstreckung der Bearbeitungsbahn (16) davor liegende Andrückelement (29) aktiviert bzw. in der Andrückposition mit den zwei den Andrückstellen (31,32). Das dritte und hintere Andrückelement (30) ist in diesem Fall deaktiviert bzw. in der abgehobenen Ruheposition. Die Beschränkung auf zwei aktivierte Andrückelemente (28,29) kann für gekrümmte Bearbeitungsbahnen von Vorteil sein. Das selektive Abheben eines Andrückelements (28,29,30) kann auch zum Ausweichen an Hindernissen vorteilhaft sein.

Figur 7 verdeutlicht eine gegenüber Figur 6 umgekehrte Betriebsstellung mit Aktivierung bzw. Zustellung in die Arbeitsposition des strahlennahen bzw. zentralen Andrückelements (28) und des in Transportrichtung (11) dahinter liegenden Andrückelements (30). Das in Transportrichtung (11) vordere Andrückelement (29) ist deaktiviert bzw. in die Ruheposition abgehoben.

In den bei Figur 3 bis 7 gezeigten Ausführungsformen führen die Andrückelemente (28,29,30) eine Zustellbewegung mittels der Zustelleinrichtung(en) (38) aus. Die Andrückkraft (F) kann dabei von der Anstelleinrichtung (41) für alle jeweils in Arbeitsposition befindlichen und dort arretierten und abgestützten Andrückelemente (28,29,30) gesteuert oder ggf. geregelt aufgebracht werden.

In einer anderen Ausführung kann die Andrückkraft (F) von der Anstelleinrichtung (41) und der jeweiligen Zustelleinrichtung (38) gemeinsam aufgebracht werden. Eine weitere Variante sieht die Kraftbeaufschlagung nur durch die jeweilige Zustelleinrichtung (38) vor. Diese eignet sich auch für Bearbeitungswerkzeuge (3) ohne Schlitten (22) oder dgl. Stellachse und ohne Anstelleinrichtung (41).

Ferner kann in einer weiteren Ausführungsform auf eine signifikante Zustellbewegung der Andrückelemente (28,29,30) verzichtet werden, wobei die Zustelleinrichtung(en) (38) steuerbare Krafterzeuger ist/sind, mit denen die Andrückkraft (F) zugeschaltetet oder abgeschaltet wird.

Eine oder mehrere Andrückrollen (28,29,30) können einen Drehantrieb (34) aufweisen. Er treibt die jeweils beaufschlagte Andrückrolle (28,29,30) synchron zu ihrer durch den Vorschub bedingten Abwälzbewegung an.

In der gezeigten Ausführungsform ist der Drehantrieb (34) als mechanischer und anderweitig von der Vorschubbewegung abgeleiteter Drehantrieb ausgebildet. Dieser weist mindestens eine das Werkstück (4) reibschlüssig kontaktierende Reibrolle (35) auf, die an der Kontaktstelle zum Werkstück (4) eine entsprechend reibungsgünstige Ausbildung hat und z.B. einen aus Kunststoff oder dgl. bestehenden Mantel mit hohem Reibbeiwert und einer gewissen Nachgiebigkeit bzw. Elastizität aufweist. Sie kann von der Bearbeitungsstelle (15) bzw. der Bearbeitungsbahn (16) in Querrichtung weiter als die zugehörige Andrückrolle (28,29,30) distanziert sein.

Die Reibrolle (35) ist mit mindestens einer zugeordneten Andrückrolle (28,29,30) drehschlüssig über eine Achsverbindung (36) gekoppelt. Im gezeigten Ausführungsbeispiel ist die Reibrolle (35) direkt mit einer einzelnen Andrückrolle über eine gemeinsame Achse (36) gekoppelt. Die Achsverbindung (36) kann alternativ eine getriebeartige Verteilung aufweisen, sodass ein Reibrolle (35) mit mehreren Andrückrollen (28,29,30) drehschlüssig gekoppelt werden kann.

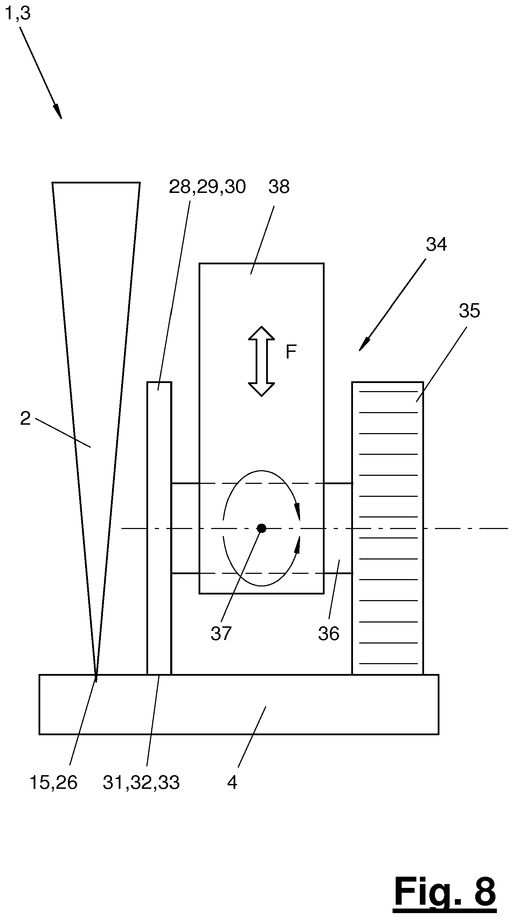

Wie Figur 8 verdeutlicht, kann die Achsverbindung (36) auch mit einer Zustellvorrichtung (38) gekoppelt sein, mit der die besagten, vorzugsweise beidseitig dazu angeordneten Rollen an die Werkstückoberfläche zugestellt und angedrückt werden. Die Achsverbindung (36) kann hierbei ein in Figur 8 gezeigtes Schwenklager (37) aufweisen, um für einen gleichmäßigen Andruck der an der Achsverbindung (36) angeschlossenen Rollen (28,29,30,35) zu sorgen.

Abwandlungen der gezeigten und beschriebenen Ausführungsformen sind in verschiedener Weise möglich. Die Andrückvorrichtung (8) kann eine andere Zahl von Andrückelementen (28,29,30) aufweisen.

In einer Variante können nur zwei Andrückelemente vorhanden sein. Dies können z.B. das strahlnahe Andrückelement (28) und ein weiteres Andrückelement sein, das in Transportrichtung (11) vor oder hinter dem strahlnahen Andrückelement (28) angeordnet ist. Ferner ist es möglich, eine Andrückvorrichtung (8) mit vier, fünf oder mehr Andrückelementen (28,29,30) auszurüsten.

In einer weiteren Abwandlung ist es möglich, ein Andrückelement, insbesondere eine Andrückrolle aus einem thermisch empfindlicheren Material herzustellen, wobei zur Minderung der thermischen Prozesseinflüsse das besagte Andrückelement durch eine thermoisolierende Blende vom Laserstrahl (2) und der Bearbeitungsstelle (15) abgeschirmt wird. Es kann dabei auch weiter von dieser Stelle (15) distanziert werden. Bei einer solchen Ausgestaltung ist es ferner möglich, auf einen Drehantrieb (34) zu verzichten und eine Andrückrolle (28,29,30) als Reibrolle mit einem entsprechend reibgünstigen Material auszubilden. Dies kann auch nur bei einer Antriebsrolle in einer Mehrfachpaarung vorgesehen sein, wobei diese Andrückrolle dann auch als Reibrolle eines entsprechend umgestaltenten Drehantriebs für die anderen Andrückrollen ausgebildet sein.

Der Drehantrieb (34) kann alternativ eine konturierte Treibrolle für einen formschlüssigen Angriff an einer entsprechend ausgebildeten Werkstückoberfläche aufweisen. Der Drehantrieb (34) kann in einer anderen Variante als steuerbarer und ggf. regelbarer motorischer Antrieb ausgebildet und mit der besagten Steuerung verbunden sein. Der Drehantrieb (34) kann auch entfallen.

Der Strahl (2) kann in anderer Weise ausgebildet sein. Es kann sich z.B. um einen Ionenstrahl oder einen Plasmastrahl handeln. Ein Strahl (2) kann konstant oder pulsweise emittiert werden. Er kann bedarfsweise auch in mehrere Teilstrahlen aufgespalten werden.

Die Bearbeitungseinrichtung (1) und das Bearbeitungswerkzeug (3) können auch für andere Bearbeitungsprozesse mit einem energiereichen Strahl (2) eingesetzt werden. Dies kann z.B. ein Schneid- oder Trennprozess oder ein Abtragprozess mit dem Strahl (2) sein. Ferner können andere Fügeprozesse, z.B. Schweißen, Kleben oder dergleichen eingesetzt werden. Die Energie des am Werkstück (4) auftreffenden Strahls (2) und die dadurch im Werkstück (4) eingebrachte Wärme kann auch zu beliebigen anderen Wärmebehandlungen des Werkstücks (4) benutzt werden.

Ferner ist es möglich, die Merkmale der vorbeschriebenen Ausführungsbeispiele und ihrer Abwandlungen in verschiedener Weise miteinander zu kombinieren und ggf. auch auszutauschen.

### BEZUGSZEICHENLISTE

- 1: Bearbeitungseinrichtung, Strahlfügeeinrichtung
- 2: Strahl energiereich, Laserstrahl
- 3: Bearbeitungswerkzeug, Strahlfügewerkzeug
- 4: Werkstück
- 5: Handhabungseinrichtung
- 6: Gestell
- 7: Bearbeitungskopf, Strahlfügekopf
- 8: Andrückeinrichtung
- 9: Zuführeinrichtung
- 10: Sensorik
- 11: Transportrichtung, Fahrtrichtung
- 12: Blech
- 13: Blech
- 14: Blechrand gebogen
- 15: Bearbeitungsstelle, Fügestelle
- 16: Bearbeitungsbahn, Fügenaht
- 17: Endbereich Bearbeitungsbahn
- 18: Hilfsmittel, Lötmittel
- 19: Industrieroboter, Gelenkarmroboter
- 20: Abtriebsglied, Roboterhand
- 21: Anschluss
- 22: Schlitten
- 23: Strahlzuführung
- 24: Strahlauslass
- 25: Optik, Scanneroptik
- 26: Auftreffpunkt
- 27: Pendeleinrichtung, Schwenkachse
- 28: Andrückelement, Andrückrolle, zentral
- 29: Andrückelement, Andrückrolle, peripher
- 30: Andrückelement, Andrückrolle, peripher
- 31: Andrückstelle
- 32: Andrückstelle
- 33: Andrückstelle
- 34: Drehantrieb
- 35: Reibrolle
- 36: Achse, Achsverbindung
- 37: Schwenklager
- 38: Zustelleinrichtung
- 39: Verstelleinrichtung
- 40: Nachführeinrichtung
- 41: Anstelleinrichtung

- F: Andrückkraft

## Patentansprüche

1. Bearbeitungseinrichtung, insbesondere Strahlfügeeinrichtung, zum Bearbeiten eines Werkstücks (4) mit einem energiereichen Strahl (2), insbesondere Laserstrahl, wobei die Bearbeitungseinrichtung (1) ein in einer Transportrichtung (11) bewegliches Bearbeitungswerkzeug (3) mit einem den Strahl (2) emittierenden Bearbeitungskopf (7) und einer Andrückeinrichtung (8) mit einem Andrückelement (28) aufweist, welches in Transportrichtung (11) gesehen auf Höhe und seitlich neben dem Strahl (2) angeordnet ist, **dadurch gekennzeichnet, dass** die Andrückeinrichtung (8) mindestens ein weiteres Andrückelement (29,30) aufweist, das in Transportrichtung (11) vor und/oder hinter dem strahlnahen Andrückelement (28) angeordnet ist, wobei die Andrückelemente (28,29,30) auf der gleichen Seite des Werkstücks (4) angeordnet sind und mit einer Andrückkraft (F) aus der gleichen Richtung wirken und wobei
die Andrückelemente (28,29,30) einzeln und vorzugsweise unabhängig voneinander zum Andrücken mit einer Spannkraft (F) an ein ein- oder mehrteiliges Werkstück (4) aktivierbar oder deaktivierbar sind.

2. Bearbeitungseinrichtung nach Anspruch 1, **dadurch gekennzeichnet, dass** die Andrückeinrichtung (8) drei Andrückelemente aufweist, wobei vor und hinter dem zentralen, strahlnahen Andrückelement (28) jeweils ein weiteres peripheres Andrückelement (29,30) angeordnet ist.

3. Bearbeitungseinrichtung nach Anspruch 1 oder 2, **dadurch gekennzeichnet, dass** die Andrückelemente (28,29,30) in einer Reihe hintereinander fluchtend angeordnet sind.

4. Bearbeitungseinrichtung nach einem der vorhergehenden Ansprüche, **dadurch gekennzeichnet, dass** jedem Andrückelement (28,29,30) eine steuerbare Zustelleinrichtung (38) zugeordnet ist oder dass mehreren, bevorzugt zwei Andrückelementen (29,30) eine gemeinsame steuerbare Zustelleinrichtung (38) zugeordnet ist, mit der die Andrückelemente (29,30) im gegenseitigen Wechsel in ihre Andrück- und Ruheposition bewegbar sind.

5. Bearbeitungseinrichtung nach einem der vorhergehenden Ansprüche, **dadurch gekennzeichnet, dass** ein oder mehrere Andrückelemente (28,29,30), bevorzugt ein oder beide weitere Andrückelemente (29,30), eine Verstelleinrichtung (39) zur Veränderung ihrer Position in Transportrichtung (11) aufweisen.

6. Bearbeitungseinrichtung nach einem der vorhergehenden Ansprüche, **dadurch gekennzeichnet, dass** bei Verfolgung einer Bearbeitungsbahn (16) am Werkstück (4), insbesondere einer Fügenaht, im mittleren Bahnbereich das zentrale, strahlnahe Andrückelement (28) deaktiviert und die weiteren peripheren Andrückelemente (29,30) aktiviert sind und dass bei Verfolgung einer Bearbeitungsbahn (15) am Werkstück (4), insbesondere einer Fügenaht, an einem Bahnendbereich (17) zumindest das zentrale, strahlnahe Andrückelement (28) aktiviert ist.

7. Bearbeitungseinrichtung nach einem der vorhergehenden Ansprüche, **dadurch gekennzeichnet, dass** ein oder mehrere, bevorzugt alle Andrückelemente (28,29,30) als drehbare Andrückrollen ausgebildet sind, und dass ein oder mehrere, bevorzugt alle Andrückrollen (28,29,30) einen Drehantrieb (34) aufweisen.

8. Bearbeitungseinrichtung nach Anspruch 7, **dadurch gekennzeichnet, dass** ein Drehantrieb (34) eine das Werkstück (4) kontaktierende Reibrolle (35) aufweist, die mit einer zugeordneten Andrückrolle (28,29,30) drehschlüssig über eine Achsverbindung (36) gekoppelt ist.

9. Bearbeitungseinrichtung nach Anspruch 8, **dadurch gekennzeichnet, dass** die Achsverbindung (36) mit einer Zustellvorrichtung (38) gekoppelt ist und ein Schwenklager (37) aufweist.

10. Bearbeitungseinrichtung nach einem der vorhergehenden Ansprüche, **dadurch gekennzeichnet, dass** das Bearbeitungswerkzeug (3) ein Gestell (6) zur Aufnahme des Bearbeitungskopfs (7) und der Andrückeinrichtung (8) aufweist, wobei am Gestell (6) ein Anschluss (21) zur Verbindung mit einer Handhabungseinrichtung (5) angeordnet ist, wobei am Gestell (6) ein beweglicher Schlitten (22) zur Aufnahme des Bearbeitungskopfs (7) und der Andrückeinrichtung (8) und eine Anstelleinrichtung (41) für den Schlitten (22) angeordnet sind und die Andrückkraft (F) der Andrückelemente (28,29,30) durch die Anstelleinrichtung (41) und/oder die Zustelleinrichtung(en) (38) erzeugt wird.

11. Bearbeitungseinrichtung nach einem der vorhergehenden Ansprüche, **dadurch gekennzeichnet, dass** das Bearbeitungswerkzeug (3) eine Sensorik (10) für Führungs- und/oder Prüfzwecke aufweist.

12. Bearbeitungseinrichtung nach einem der vorhergehenden Ansprüche, **dadurch gekennzeichnet, dass** die Bearbeitungseinrichtung (1) eine mehrachsig bewegliche Handhabungseinrichtung (5) mit einem angeschlossenen Bearbeitungswerkzeug (3) gemäß mindestens einem der Ansprüche 1 bis 11 aufweist.

13. Bearbeitungseinrichtung nach Anspruch 12, **dadurch gekennzeichnet, dass** die Handhabungseinrichtung (5) als Industrieroboter (19), insbesondere als Gelenkarmroboter, ausgebildet ist.

## Claims

1. Machining installation, in particular a beam joining installation, for machining a workpiece (4) with an energized beam (2), in particular a laser beam, wherein the machining installation (1) has a machining tool (3) that is movable in a transportation direction (11) and has a machining head (7) that emits the beam (2) and a contact-pressure installation (8) having a contact-pressure element (28) which, when viewed in the transportation direction (11), is disposed at a height level with and so as to be laterally next to the beam (2), **characterized in that** the contact-pressure installation (8) has at least one further contact-pressure element (29, 30) which in the transportation direction (11) is disposed ahead of and/or behind the beam-proximate contact-pressure element (28), wherein the contact-pressure elements (28, 29, 30) are disposed on the same side of the workpiece (4) and act from the same direction with a contact-pressure force (F), and wherein the contact-pressure elements (28, 29, 30) for pressing with a clamping force (F) on a single-part or multiple-part workpiece (4) are activatable or de-activatable individually and preferably independently of one another.

2. Machining installation according to Claim 1, **characterized in that** the contact-pressure installation (8) has three contact-pressure elements, wherein in each case one further peripheral contact-pressure element (29, 30) is disposed ahead of and behind the central beam-proximate contact-pressure element (28).

3. Machining installation according to either of Claims 1 and 2, **characterized in that** the contact-pressure elements (28, 29, 30) are disposed sequentially so as to be mutually aligned in a row.

4. Machining installation according to one of the preceding claims, **characterized in that** each contact-pressure element (28, 29, 30) is assigned one controllable feed adjustment installation (38), or **in that** a plurality of, preferably two, contact-pressure elements (29, 30) are assigned one common controllable feed adjustment installation (38) by way of which the contact-pressure elements (29, 30) in an alternating manner are movable into their pressing and resting positions.

5. Machining installation according to one of the preceding claims, **characterized in that** one or a plurality of contact-pressure elements (28, 29, 30), preferably one or both further contact-pressure elements (29, 30), have a readjustment installation (39) for modifying the position of said contact-pressure elements in the transportation direction (11).

6. Machining installation according to one of the preceding claims, **characterized in that** in the tracking of a machining path (16), in particular of a joining seam, on the workpiece (4) in the central path region the central beam-proximate contact-pressure element (28) is deactivated and the further peripheral contact-pressure elements (29, 30) are activated, and **in that** in the tracking of a machining path (15), in particular of a joining seam, on the workpiece (4), on a path end region (17) at least the central, beam-proximate contact-pressure element (28) is activated.

7. Machining installation according to one of the preceding claims, **characterized in that** one or a plurality, preferably all, of the contact-pressure elements (28, 29, 30) are configured as rotatable contact-pressure rollers, and **in that** one or a plurality, preferably all, of the contact-pressure rollers (28, 29, 30) have a rotary drive (34).

8. Machining installation according to Claim 7, **characterized in that** a rotary drive (34) has a friction roller (35) that contacts the workpiece (4), said friction roller (35) being coupled to an assigned contact-pressure roller (28, 29, 30) in a rotationally fixed manner by way of an axle connection (36).

9. Machining installation according to Claim 8, **characterized in that** the axle connection (36) is coupled to a feed adjustment device (38) and has a pivot bearing (37).

10. Machining installation according to one of the preceding claims, **characterized in that** the machining tool (3) has a frame (6) for receiving the machining head (7) and the contact-pressure installation (8), wherein a connector (21) for connecting to a handling installation (5) is disposed on the frame (6), wherein a movable slide (22) for receiving the machining head (7) and the contact-pressure installation (8) and an adjustment installation (41) for the slide (22) are disposed on the frame (6), and the contact-pressure force (F) of the contact-pressure elements (28, 29, 30) is generated by the adjustment installation (41) and/or by the feed adjustment installation(s) (38).

11. Machining installation according to one of the preceding claims, **characterized in that** the machining tool (3) has a sensor mechanism (10) for guiding and/or testing purposes.

12. Machining installation according to one of the preceding claims, **characterized in that** the machining installation (1) has a handling installation (5), movable in multiple axes, having a connected machining tool (3) according to at least one of Claims 1 to 11.

13. Machining installation according to Claim 12, **characterized in that** the handling installation (5) is configured as an industrial robot (19), in particular as an articulated-arm robot.

## Revendications

1. Dispositif d'usinage, en particulier dispositif d'assemblage par faisceau, destiné à l'usinage d'une pièce à usiner (4) comprenant un faisceau (2) à haute énergie, en particulier un rayon laser ;
dans lequel le dispositif d'usinage (1) présente un outil d'usinage (3) mobile dans une direction de transport (11), avec une tête d'usinage (7) qui émet le faisceau (2), ainsi qu'un mécanisme de compression (8) avec un élément de compression (28), lequel est disposé, par rapport à la direction de transport (11), à hauteur et à côté du faisceau (2) ;
**caractérisé en ce que** le mécanisme de compression (8) présente au moins un autre élément de compression (29, 30) qui est disposé dans la direction de transport (11) en amont et/ou en aval de l'élément de compression (28) qui est situé à proximité du faisceau ;
dans lequel les éléments de compression (28, 29, 30) sont disposés sur le même côté que la pièce à usiner (4) et agissent avec une force de compression (F) à partir de la même direction ; et
dans lequel les éléments de compression (28, 29, 30) peuvent être activés ou désactivés de manière individuelle et, de manière avantageuse, indépendamment l'un de l'autre par rapport à la compression au moyen d'une force de serrage (F), au niveau d'une pièce à usiner (4) constituée d'une seule pièce ou de plusieurs pièces.

2. Dispositif d'usinage selon la revendication 1, **caractérisé en ce que** le mécanisme de compression (8) présente trois éléments de compression, dans lequel un autre élément de compression (29, 30) périphérique est disposé respectivement en amont et en aval de l'élément de compression (28) central qui est situé à proximité du faisceau.

3. Dispositif d'usinage selon la revendication 1 ou 2, **caractérisé en ce que** les éléments de compression (28, 29, 30) sont disposés en étant alignés dans une rangée l'un à la suite de l'autre.

4. Dispositif d'usinage selon l'une des revendications précédentes, **caractérisé en ce qu'**un mécanisme d'avance (38) pouvant être commandé est associé à chaque élément de compression (28, 29, 30) ; ou
**caractérisé en ce qu'**un mécanisme d'avance (38) commun, pouvant être commandé, est associé à plusieurs, de préférence deux, éléments de compression (29, 30) et au moyen duquel mécanisme d'avance (38) les éléments de compression (29, 30) peuvent être déplacés en alternance mutuelle dans leur position de compression et dans leur position de repos.

5. Dispositif d'usinage selon l'une des revendications précédentes, **caractérisé en ce qu'**un ou plusieurs éléments de compression (28, 29, 30), de préférence un ou les deux autres éléments de compression (29, 30), présentent un mécanisme d'ajustement (39) destiné au changement de leur position dans la direction de transport (11).

6. Dispositif d'usinage selon l'une des revendications précédentes, **caractérisé en ce que**, lors de la poursuite d'une voie d'usinage (16) qui se trouve au niveau de la pièce à usiner (4), en particulier d'une jonction de l'assemblage, l'élément de compression (28) central, situé à proximité du faisceau, est désactivé et les autres éléments de compression (29, 30) périphériques sont activés, dans la zone médiane de la voie ; et
**caractérisé en ce que**, lors de la poursuite d'une voie d'usinage (15) qui se trouve au niveau de la pièce à usiner (4), en particulier d'une zone d'assemblage, tout au moins l'élément de compression (28) central, situé à proximité du faisceau, est activé au niveau d'une zone d'extrémité de la voie (17).

7. Dispositif d'usinage selon l'une des revendications précédentes, **caractérisé en ce qu'**un ou plusieurs, de préférence tous les éléments de compression (28, 29, 30) sont conçus sous la forme de rouleaux de compression rotatifs ; et
**caractérisé en ce qu'**un ou plusieurs, de préférence tous les rouleaux de compression (28, 29, 30) présentent un entraînement rotatif (34).

8. Dispositif d'usinage selon la revendication 7, **caractérisé en ce qu'**un entraînement rotatif (34) présente un galet de friction (35) qui est mis en contact avec la pièce à usiner (4) et qui est couplé à un rouleau de compression (28, 29, 30), à laquelle il est associé, dans une liaison en rotation par l'intermédiaire d'une jonction par essieu (36).

9. Dispositif d'usinage selon la revendication 8, **caractérisé en ce que** la jonction par essieu (36) est couplée à un dispositif d'avance (38) et présente un palier de pivotement (37).

10. Dispositif d'usinage selon l'une des revendications précédentes, **caractérisé en ce que** l'outil d'usinage (3) présente un châssis (6) destiné au logement de la tête d'usinage (7) et du mécanisme de compression (8) ;
dans lequel un raccord (21) destiné à la jonction avec un mécanisme de manipulation (5) est disposé au niveau du châssis (6) ;
dans lequel un chariot (22) mobile destiné au logement de la tête d'usinage (7) et du mécanisme de compression (8), ainsi qu'un mécanisme de réglage (41) pour le chariot (22) sont disposés au niveau du châssis (6) ; et
dans lequel la force de compression (F) des éléments de compression (28, 29, 30) est générée par le mécanisme de réglage (41) et/ou par le ou les mécanismes d'avance (38).

11. Dispositif d'usinage selon l'une des revendications précédentes, **caractérisé en ce que** l'outil d'usinage (3) présente un système de capteurs (10) à des fins de guidage et/ou de contrôle.

12. Dispositif d'usinage selon l'une des revendications précédentes, **caractérisé en ce que** le dispositif d'usinage (1) présente un mécanisme de manipulation (5) mobile à plusieurs axes avec un outil d'usinage (3) auquel il est raccordé, conformément à au moins l'une des revendications 1 à 11.

13. Dispositif d'usinage selon la revendication 12, **caractérisé en ce que** le mécanisme de manipulation (5) est conçu sous la forme d'un robot industriel (19), en particulier sous la forme d'un robot à bras articulé.
